**Europäisches Patentamt**

**European Patent Office**

**Office européen des brevets**

(19)

(11) Veröffentlichungsnummer: **0 175 123 B1**

(12) # EUROPÄISCHE PATENTSCHRIFT

(45) Veröffentlichungstag der Patentschrift: **06.03.91**

(51) Int. Cl.⁵: **C02F 1/46**

(21) Anmeldenummer: **85109886.3**

(22) Anmeldetag: **06.08.85**

(54) **Verfahren und Vorrichtung zum Entkeimen und gleichzeitigen Enthärten von Leitungswasser.**

(30) Priorität: **20.08.84 DE 3430610**

(43) Veröffentlichungstag der Anmeldung:
**26.03.86 Patentblatt 86/13**

(45) Bekanntmachung des Hinweises auf die
Patenterteilung:
**06.03.91 Patentblatt 91/10**

(84) Benannte Vertragsstaaten:
**AT CH DE FR IT LI SE**

(56) Entgegenhaltungen:
**FR-A- 2 283 698**
**US-A- 3 873 438**
**US-A- 4 384 943**

(73) Patentinhaber: **Siemens Aktiengesellschaft**
**Wittelsbacherplatz 2**
**W-8000 München 2(DE)**

(72) Erfinder: **Hohmann, Eugen**
**Leimenberg 32**
**W-6140 Bensheim(DE)**
Erfinder: **Mund, Konrad, Dr.**
**Langenbrucker Weg 10**
**W-8525 Uttenreuth(DE)**
Erfinder: **Weidlich, Erhard, Dr.**
**Am Tennenbach 41**
**W-8521 Spardorf(DE)**

## Beschreibung

Aus der FR-22 83 698 und der US-PS 4,384,943 sind Verfahren und Vorrichtungen zur Entkeimung von Flüssigkeiten bekannt. Bei dem Verfahren nach der erstgenannten Druckschrift wird die Flüssigkeit durch eine aus Kathode und Anode bestehende elektrolytische Zelle geleitet. Die Besonderheit des dort beschriebenen Verfahrens ist, daß der Flüssigkeit vor oder in der elektrolytischen Zelle eine definierte Silbermenge zur Verbesserung der Entkeimungswirkung beigefügt wird. Die Zufuhr des Silbers erfolgt über eine mit einer Silberanode ausgerüstete elektrolytische Dosierzelle, die der elektrolytischen Zelle für die anodische Oxidation entweder vorgeschaltet oder in diese integriert ist. Das zugeführte Silber wird elektrolytisch abgeschieden und der Flüssigkeit in Form von Silberionen zugeführt. Je nachdem, ob es sich um einen gleichbleibenden oder veränderlichen Flüssigkeitsdurchsatz handelt, kann die Silberabscheidung konstant oder über eine entsprechende Regelschaltung proportional dem Flüssigkeitsdurchsatz angepaßt werden.

Das in der US-Patentschrift beschriebene Verfahren, welches vorzugsweise zur Aufbereitung von Abwasser auf Schiffen vorgesehen ist, enthält ebenfalls eine elektrolytische Zelle, deren Spannungspolarität umgepolt werden kann, um so die Elektroden von chemischen und biologischen Ablagerungen zu befreien.

Beide Verfahren und Vorrichtungen sind nicht dazu geeignet, das nachstehend näher erläuterte Problem zu lösen und ein wirksames Entkeimen und gleichzeitiges Enthärten des Wassers bei sehr kleinen, diskontinuierlich entnehmbaren Verbrauchsmengen zu bewirken.

Bei medizinischen, insbesondere zahnmedizinischen Geräten entnimmt man das für bestimmte Anwendungen, wie Kühlung und Reinigung der Präparationsstelle, Mundspülung und Spülung von Speibecken, notwendige Nutzwasser normalerweise aus dem öffentlichen Wasserleitungsnetz. Die Entnahmemengen liegen, nachdem die angeschlossenen Verbraucher (Handstücke, Spritzen, Spei- und Spüleinrichtungen) an sich schon einen relativ geringen, im Bereich ml/min liegenden Verbrauch haben, und die Entnahme außerdem diskontinuierlich ist, bei wenigen Litern/Tag, bei zahnärztlichen Geräten beispielsweise bei etwa 5 l/Tag.

Die Problematik der Entkeimung des Wassers entsteht hauptsächlich dadurch, daß das Wasser, bevor es den Verbrauchern zugeführt wird, erwärmt wird. Bei zahnärztlichen Behandlungsinstrumenten wird beispielsweise, um Kältereize zu vermeiden, das Wasser etwa auf Körpertemperatur erwärmt. Da der überwiegende Teil der Verbindungsleitungen und der Schaltmittel innerhalb der Geräte aus Kunststoff besteht, finden bereits mit der Zufuhr des Frischwassers in das Gerät gelangende oder anderweitig eindringende Bakterien im Geräteinneren und in den Leitungen ideale Vermehrungsbindungen vor. Die Folge davon sind unkontrollierbare Keimverschleppungen. Das Eindringen von Keimen und Bakterien ist insbesondere durch die heute üblichen, sogenannten Rücksaugvorrichtungen begünstigt, welche vorgesehen sind, um ein Nachtropfen des an den Instrumenten austretenden Wassers zu verhindern. Bei Ausschalten des jeweils benutzten Instruments wird nämlich ein Teil des im Instrument und in dessen Anschlußschlauch befindlichen Wassers in das Gerät zurückgesaugt. Dieser Rücksaugeffekt hat jedoch zur Folge, daß aus der Mundhöhle, mit der das Instrument während einer Behandlung in Kontakt kommt, Bakterien mit angesaugt und in das Geräteinnere gelangen können.

Ein weiteres Problem tritt auf bei Verwendung von Leitungswasser mit relativ hoher Wasserhärte. Das aus dem öffentlichen Wasserleitungsnetz entnehmbare Trinkwasser weist häufig eine relativ hohe Härte auf; damit verbunden ist eine erhöhte Kalkabscheidung, die insbesondere bei empfindlichen Geräten und Apparaturen zu Funktionsstörungen durch Zusetzen der Leitungen, Verstopfen von Düsen usw. führen kann. Dies ist insbesondere bei Bohrantrieben mit Kühlung der Präparationsstelle von Bedeutung, denn wenn keine ausreichende Kühlung des Behandlungsobjektes (Zahn) mehr gewährleistet ist, können unzulässig hohe Temperaturen am Behandlungsobjekt entstehen, die bei menschlichen Geweben zur Koagulation des Eiweißes führen, wodurch sich Toxine bilden, die letztlich ein Absterben des Zahnnerves bewirken.

Der in den Ansprüchen 1 und 2 angegebenen Erfindung liegt die Aufgabe zugrunde, ein Verfahren und eine Vorrichtung anzugeben, mit denen sich die vorstehend erläuterten Probleme beseitigen lassen, mit denen sich also auch relativ hartes Leitungswasser weitgehend keimfrei einsetzen läßt, ohne daß die oben erläuterten störenden Effekte auftreten.

Nachfolgend werden das Verfahren sowie eine Vorrichtung zur Durchführung dieses Verfahrens näher beschrieben. Es zeigen:

Figur 1    eine Prinzipdarstellung der erfindungsgemäßen Vorrichtung mit der zugehörigen hydraulischen Schaltung,

Figur 2    eine vereinfachte Darstellung des elektrischen Schaltbildes,

Figur 3    einen Längsschnitt durch die in Figur 1 schematisch dargestellte elektrolytische Zelle.

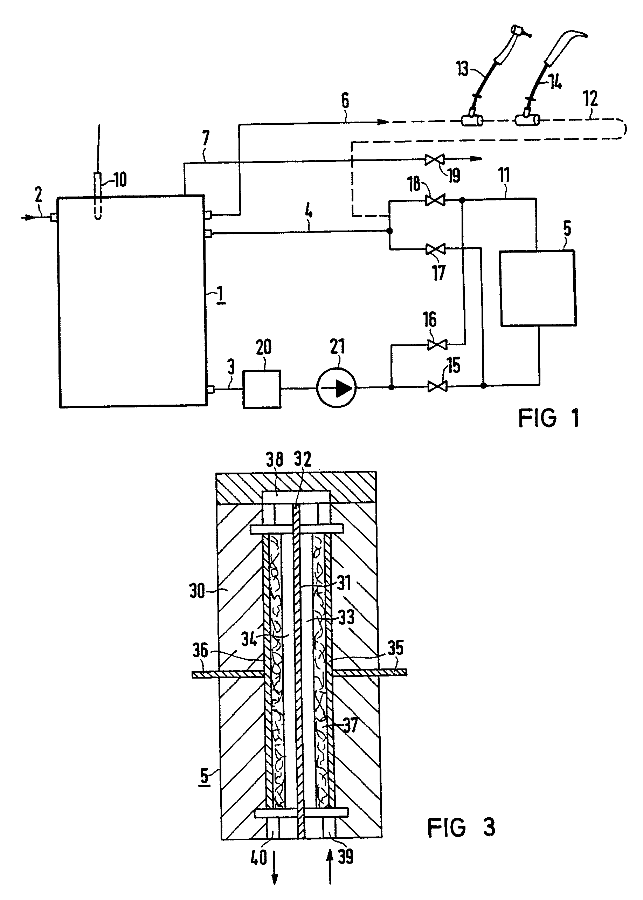

Figur 1 zeigt den Aufbau der erfindungsgemäßen Vorrichtung anhand einer Prinzipdarstellung. An einen in sich geschlossenen, als Wasserspeicher dienenden Behälter 1 mit einem Behältervolumen von etwa 0,5 bis 2 dm³ sind mittels geeigneter Anschlüsse eine Netzwasserleitung 2, eine zu einer elektrolytischen Zelle 5 führende Zuleitung 3, eine Rückleitung 4 von der Zelle 5, eine zu diversen Verbrauchern 13 und 14 führende Leitung 6 sowie eine Entlüftungsleitung 7 angeschlossen.

Ein von der elektrolytischen Zelle 5 wegführende Leitungsabschnitt 11 ist entweder mit der zum Behälter 1 führenden Rückleitung 4 verbunden, und bildet so mit der Zuleitung 3 eine Ringleitung, oder, als Alternativlösung, mit einem in der Darstellung gestrichelt eingezeichneten Leitungsabschnitt 12 verbunden, der mit den Leitungen 3,11 und 6 ebenfalls eine Ringleitung bildet, an der die diversen Verbraucher, wie z.B. ein Bohrinstrument 13 oder eine Spritze 14, abgegriffen werden können. Die Leitung 6 der Ringleitung bildet in diesem Falle dann die Rückleitung zum Behälter 1. Mit 10 ist eine Füllstandssonde in Form z.B. einer elektronischen Leitwertsonde bezeichnet, mit der ein in der Leitung 7 angeordnetes Entlüftungsventil 19 zur Entlüftung des Behälters 1 geschaltet werden kann. Magnetventile 15 bis 18 dienen zur Steuerung des durch die elektrolytische Zelle 5 fließenden Wassers, das Ventil 19, wie bereits erwähnt, zur Entlüftung des Behälters 1.

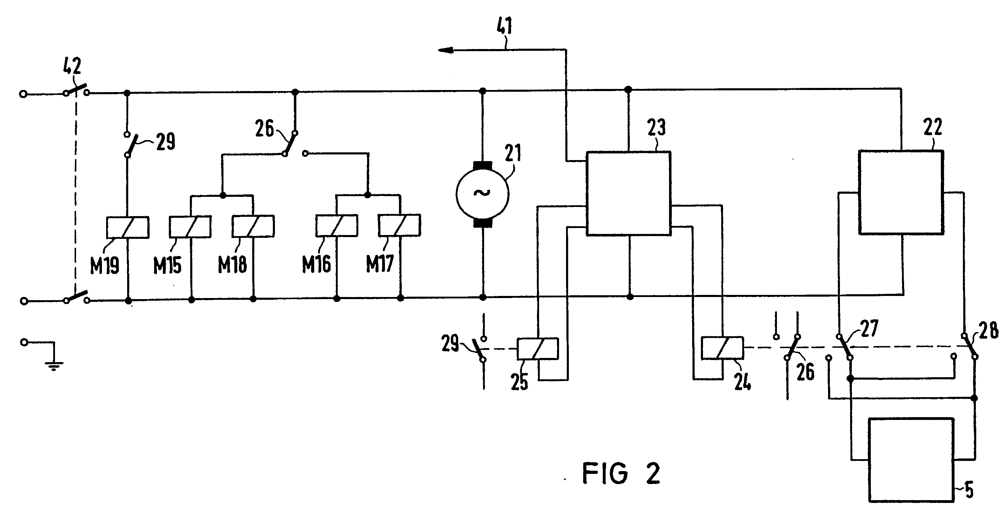

Der Behälterinhalt wird nach Filterung in einem Filter 20 mittels einer Umwälzpumpe 21 über die jeweils geöffneten Ventile 15 und 18 durch die elektrolytische Zelle 5, von dort entweder über die Leitungen 11 und 4 oder über die Leitungen 12, und 6 zurück in den Behälter 1 gepumpt. Die Umwälzmenge beträgt etwa 200 bis 500 ml/min. Das an den Verbrauchern 13, 14 entnommene Wasser, welches im Bereich von einigen zehn bis maximal einigen hundert ml/min liegt, wird automatisch über den Netzanschluß 2 aus der Netzwasserleitung wieder nachgefüllt. Nach einer gewissen Zeit werden sowohl die Polarität der Zellenspannung als auch die Durchflußrichtung des Wassers durch die Zelle umgepolt. Die Ablaufsteuerung wird anhand Figur 2 näher erläutert.

Die elektrolytische Zelle 5 wird von einer aus dem elektrischen Netz (über Netzschalter 42) gespeisten Steuerelektronik 22 mit der notwendigen Spannung versorgt. Eine zentrale Steuereinheit 23, welche vorteilhafterweise einen Mikroprozessor enthalten kann, steuert zwei Relais 24, 25. Mittels des Relais 24 wird ein Umschaltwerk, bestehend aus den Schaltern 26 bis 28, betätigt, wobei mit dem Schalter 26 die Magnetventile 15, 18 bzw. 16, 17 eingeschaltet werden und damit die Strömungsrichtung des Wassers durch die elektrolytische Zelle 5 (sh. Figur 1) gewechselt wird und mittels der Schalter 27 und 28 die Polarität der elektrolytischen Zelle umgepolt wird. Mit dem Relais 25 wird ein Schalter 29 betätigt, mit dem das Entlüftungsventil 19 geschaltet wird.

Figur 3 zeigt den Aufbau der elektrolytischen Zelle 5. Ein im Querschnitt rechteckiges Gehäuse 30 aus Isoliermaterial mit den Abmessungen 150 x 100 x 30 mm (B x H x T) bildet einen Hohlraum 31, welcher durch eine längs eingespannte, Ionen leitende Membran 32 in einen Anolytraum 33 und einen Katholytraum 34 unterteilt ist. Die Membran 32 besteht vorzugsweise aus sulfoniertem Polytetrafluoräthylen und kann als Kationenaustauschermembran bezeichnet werden. Ihr Strömungswiderstand ist im Vergleich zum Strömungswiderstand des Anoden- und Kathodenraumes (33,34) groß. Im Anolytraum 33 ist eine Anode 35, im Katholytraum 34 eine Kathode 36 angeordnet. Anode und Kathode sind plattenförmig ausgebildet und bestehen aus gleichem Material, vorzugsweise aus aktiviertem Titan. Sie können auch aus Platinblech mit einem oder mehreren aufgepunkteten Netzen aus Platin oder aus Platin und Iridium bestehen. Anstelle der Netze können auch Streckmetalle aus Titan oder Tantal eingesetzt werden, die mit Platinmohr oder Platin- und Rutheniumoxid belegt sind. Vorteilhaft ist es auch, gegen Chlor beständige poröse Metalle, wie Raney-Platin und porösen Titanschwamm, oder gesinterte Metalle, die gegebenenfalls mit Edelmetallkatalysatoren belegt sind, als Elektrodenmaterial einzusetzen. Diese poröse Material kann vorteilhafterweise den Anoden- und Kathodenraum einfüllen. Die Elektrodenfläche liegt zwischen 20 und 250 cm², bei 100 cm² vorteilhafterweise.

Mit 37 ist ein Turbulenzgitter bezeichnet, welches in den beiden Räumen 33, 34 eingebracht ist und dazu dienen soll, die Wasserströmung in einen Turbulenzzustand zu versetzen. Als Material ist zweckmäßigerweise ein chemikalienbeständiges Gewebe, z.B. aus Teflon, vorgesehen. Das Turbulenzgitter 37 kann entfallen, wenn die Elektroden aus Streckmetall bestehen, da durch deren geometrischen Aufbau bereits die notwendige Verwirbelung erzielt wird. Der Elektrodenabstand liegt bei 0,3 bis 1 mm.

Der Anolytraum 33 ist über einen Verbindungskanal 38 mit dem Katholytraum 34 verbunden, wodurch die in Pfeilrichtung über den Kanal 39 aus der Zuleitung 3 einströmende Flüssigkeit nach Durchgang durch den Anolytraum in den Katholytraum übertreten kann. Die Flüssigkeit wird nach Durchströmen der Zelle 5 mittels des am Auslaßkanal 40 angeschlossenen Leitungsabschnittes 11 entweder über die Rückleitung 4 oder über die Ringleitung 12, 6 in den Behälter 1 geleitet.

In der ständigen Umwälzung des Wassers aus dem Behälter 1 über die elektrolytische Zelle 5 liegt die Besonderheit des Verfahrens. Die in der durchlaufenden Flüssigkeit enthaltenen Keime werden im Anolytraum der Zelle abgetötet. Der Abtötungsvorgang beruht auf Effekten, welche durch die elektrolytische Dissoziation hervorgerufen werden. Im einzelnen sind dies
- direkte Oxidation der Keime durch Elektronenentzug bei Kontakt mit der Anodenfläche der Elektrode,
- indirekte Oxidation der Keime durch naszierenden Sauerstoff,
- Oxidation der Keime durch freies Chlor.

Die Härtereduzierung, d.h. die Karbonatabscheidung, läuft im Katholytraum der Zelle ab, wobei durch Ver ringerung der H+-Ionenkonzentration an der Kathodentrennschicht eine pH-Wert-Veränderung in Richtung Alkalisierung eintritt, wodurch (unter Bildung von Wasserstoff) das Kalziumkarbonat ausfällt.

Die Trennung des Elektrodenraumes mit einem Ionen durchlässigen Diaphragma und die Verwendung von Turbulenzgittern in dem so abgeteilten Anolyt- und Katholytraum erhöht den Wirkungsgrad der elektrolytischen Zelle. Verwendet man als Trennwand ein Gewebe, so muß dessen Maschenweite um ein Vielfaches kleiner gewählt werden als die des Turbulenzgitters.

Die durch die Wasserstoffentwicklung im Katholytraum der Zelle gebildeten Gase, die mit zunehmender Einschaltdauer sich im Behälter 1 ansammeln, würden das Speichervolumen des Behälters zunehmend reduzieren. Um dies zu verhindern, wird über die Füllstandssonde 10 bei Absinken eines bestimmten Füllstandes das Entlüftungsventil 19 kurzzeitig eingeschaltet, um die sich ansammelnden Gase nach außen abführen zu können. Ein entsprechender Steuerungsbefehl wird über die Steuerleitung 41 (Figur 2) an die Steuerelektronik 23 gegeben.

Neben der Füllstandsregelung bewirkt die Steuereinrichtung 23 auch eine Zeitintervallsteuerung für das Umschalten der Magnetventilgruppen 15, 18 einerseits und 16, 17 andererseits sowie die bereits geschilderte Polaritätsumschaltung an der elektrolytischen Zelle.

Diese Fluß- und Polaritätsänderung ist notwendig, um die Kalziumkarbonatablagerung an der Kathoden-Elektrode in Lösung zu überführen.

Die Umschaltzeitintervalle werden von der jeweils vorliegenden Wasserhärte bestimmt. Vorteilhafterweise wird anhand der Wasserhärte der Zeitintervall bestimmt. Bei sehr großen Wasserhärten liegt der Zeitintervall relativ kurz, z.B. bei etwa 60 min, bei geringeren Wasserhärten können die Zeitintervalle doppelt so lange angesetzt werden.

Die Stromdichte, mit der die Zelle betrieben wird, liegt bei etwa 5 bis 50 mA/cm² Elektrodenfläche, vorzugsweise bei etwa 20 mA/cm² Elektrodenfläche.

## Ansprüche

1. Verfahren zum Entkeimen und gleichzeitigen Enthärten von Wasser, welches dem Wasserleitungsnetz in Mengen von wenigen Litern/Tag entnommen und bei diskontinuierlicher Entnahme diversen Verbrauchern (13, 14) zugeführt wird, unter Verwendung einer an sich bekannten, nach dem Prinzip der elektrolytischen Dissoziation arbeitenden Zelle (5), deren Spannungspolarität umgepolt werden kann , **dadurch gekennzeichnet,** daß das zu behandelnde erwärmte Wasser vor Entnahme einem Speicher (1) zugeführt wird, der zusammen mit einer Ringleitung (3, 11, 4; 3, 11, 12, 6) und der dazwischengeschalteten, elektrolytischen Zelle (5) einen geschlossenen Kreislauf bildet, daß das Wasser in diesem Kreislauf umgewälzt wird und daß in bestimmten Zeitintervallen die Flußrichtung des Wassers durch die Zelle (5) umgepolt wird, indem wechselweise der zur Zelle (5) hinführende Leitungsabschnitt (4) mit deren Ausgang (40) und der von der Zelle (5) wegführende Leitungsabschnitt (11) mit deren Eingang (39) und umgekehrt verbunden und dabei gleichzeitig die Spannungspolarität der Zelle umgepolt werden.

2. Vorrichtung zur Durchführung des Verfahrens nach Anspruch 1, **gekennzeichnet durch** folgende Merkmale:
   a) ein geschlossener Behälter (1) mit einem Speichervolumen von etwa 0,5 bis 2 dm³, vorzugsweise 1 dm³, enthält Anschlüsse an das Wasserleitungsnetz (2) sowie an Zu- und Rücklaufleitungen (3, 4, 6);
   b) die Zu- und Rücklaufleitungen (3, 4, 6) bilden zusammen mit weiteren Leitungsabschnitten (11, 12) eine Ringleitung (3, 11, 4; 3, 11, 12, 6),
   c) zwischen Zu- und Rücklaufleitungen (3, 4, 6) ist eine elektrolytische Zelle (5) geschaltet, die zusammen mit dem Be hälter (1) und der Ringleitung (3, 11, 4; 3, 11, 12, 6) einen geschlossenen Kreislauf bildet;
   d) die elektrolytische Zelle (5) enthält in bekannter Weise eine Anode (35) und Kathode (36), ist an Gleichspannung anschließbar und wird mittels einer elektrischen Steuereinrichtung (22) mit einer Stromdichte von etwa 5 bis 50, vorzugsweise 20 mA/ cm² Elektrodenfläche, betrieben;
   e) eine Umwälzeinrichtung (21) wälzt das Wasser aus dem Behälter (1) über die Ringleitung (3, 11, 4; 3, 11, 12, 6) und die Zelle (5) um;
   f) Steuerventile (15, 18; 16, 17; 19) verbinden wechselweise den Leitungsabschnitt (4) zur Zelle (5) mit deren Ausgang (40) und den Leitungsabschnitt (11) von der Zelle (5) mit deren Eingang (39) und umgekehrt und entlüften den Behälter (1);

g) eine Schaltungsanordnung (23) steuert die Ventile (15 bis 19) und die elektrolytische Zelle (5).

3. Vorrichtung nach Anspruch 2, **dadurch gekennzeichnet,** daß der Behälter (1) einen Meßfühler (10) enthält, welcher ein Entlüftungsventil (19) zur Entlüftung des Behälters (1) betätigt.

4. Vorrichtung nach Anspruch 3, **dadurch gekennzeichnet,** daß als Meßfühler eine elektronische Leitwertmeßsonde (10) vorgesehen ist.

5. Vorrichtung nach einem der Ansprüche 2 bis 4, **dadurch gekennzeichnet,** daß ein von einer Steuerelektronik (22) geschaltetes Umschaltwerk (26 bis 28) vorhanden ist, mit dem einerseits die Polarität der Zelle (5) gewechselt und andererseits die Ventile (15 bis 18) im Sinne einer Änderung der Durchflußrichtung des Wassers durch die Zelle (5) geschaltet werden.

6. Vorrichtung nach einem der Ansprüche 2 bis 5, **dadurch gekennzeichnet,** daß eine zentrale Steuereinrichtung (23) vorhanden ist, welche die Umschaltzeitintervalle für das Umschaltwerk entsprechend der Wasserhärte bestimmt.

7. Vorrichtung nach einem der Ansprüche 2 bis 6, **dadurch gekennzeichnet,** daß die elektrolytische Zelle (5) ein im Querschnitt rechteckiges Gehäuse (30) enthält, welches einen Hohlraum (31) bildet, in dem zwei im Abstand von 0.3 Millimetern bis einem Millimeter angeordnete, eine Anode und eine Kathode bildende Elektroden (35, 36) einander gegenüberstehen, daß zwischen den beiden Elektroden eine ionenleitende Trennwand (32) vorhanden ist, die den Hohlraum (31) in einen die Anode aufnehmenden Anolytraum (33) und in einen die Kathode (36) aufnehmenden Kathlytraum (34) unterteilt, daß Anoden- und Kathodenraum an der einen Stirnseite durch einen Strömungskanal (38) miteinander verbunden sind und an der anderen Stirnseite je einen Kanal (39, 40) aufweisen, von denen der der Anode benachbarte, mit der Flüssigkeitszuleitung (3) verbundene Kanal (39) den Eingang und der andere Kanal (40) den Ausgang der Zelle (5) bilden.

8. Vorrichtung nach Anspruch 7, **dadurch gekennzeichnet,** daß Anoden- und Kathodenraum (33, 34) der elektrolytischen Zelle (5) durch eine Kationenaustauschermembran (32) voneinander getrennt sind.

9. Vorrichtung nach Anspruch 8, **dadurch gekennzeichnet,** daß der Strömungswiderstand der Membran (32) groß ist gegenüber demjenigen von Anoden- und Kathodenraum (33, 34).

10. Vorrichtung nach Anspruch 8 oder 9, **dadurch gekennzeichnet,** daß die Membran (32) aus sulfoniertem Polytetrafluoräthylen besteht.

11. Vorrichtung nach Anspruch 7, **dadurch gekennzeichnet,** daß die Elektroden (35, 36) porös sind und den Anoden- bzw. Kathodenraum ausfüllen.

12. Vorrichtung nach einem der Ansprüche 7 bis 11, **dadurch gekennzeichnet,** daß die Elektroden (35, 36) aus aktiviertem Titan bestehen, vorzugsweise in Form eines Netzes oder Streckmetalles.

13. Vorrichtung nach Anspruch 12, **dadurch gekennzeichnet,** daß die Elektroden (35, 36) mit Edelmetallen aktiviert sind.

14. Vorrichtung nach einem der Ansprüche 7 bis 13, **dadurch gekennzeichnet,** daß die Elektroden (35, 36) Elektrokatalysatoren enthalten.

15. Vorrichtung nach einem der Ansprüche 7 bis 11, **dadurch gekennzeichnet,** daß Anoden- und Kathodenraum (33, 34) mit einem Turbulenzgitter (37) versehen sind.

16. Vorrichtung nach einem der Ansprüche 7 bis 15, **dadurch gekennzeichnet,** daß die wirksame Elektrodenfläche 20 bis 250 cm$^2$, vorzugsweise 100 cm$^2$ beträgt.

17. Vorrichtung nach einem der Ansprüche 2 bis 16, **dadurch gekennzeichnet,** daß die Verbraucher (13, 14) an denjenigen Leitungsabschnitt (6, 12) der Ringleitung (3, 11, 12, 6) abgegriffen werden, die mit der Rücklaufleitung (11) verbunden ist und in den Behälter (1) mündet.

## Claims

1. Process for the sterilising and simultaneous softening of water which is taken from the water pipe system in quantities of a few litres per day and is supplied by intermittent removal to various consuming devices (13, 14), using a cell (5), known per se, operating in accordance with the principle of electrolytic dissociation, the voltage polarity of which can be reversed, characterised in that the heated water to be treated is supplied to a reservoir (1) before removal, this reservoir forming a closed system together with a ring circuit (3, 11, 4; 3, 11, 12, 6) and the intermediately connected electrolytic cell (5), in that the water is circulated in this system and in that at specific intervals of time the flow direction of the water through the cell (5) is reversed, and alternately the pipe section (4) leading to the cell (5) is joined to its outlet (40) and the pipe section (11) leading away from the cell (5) is connected to its inlet (39) and vice versa, and thus at the same time the voltage polarity of the cell is reversed.

2. Device for carrying out the process of claim 1, characterised by the following features:

  a) a closed container (1) with a reservoir volume of approximately 0.5 to 2 dm$^3$, preferably 1 dm$^3$, contains connections to the water mains supply (2) and to supply and return pipes (3, 4, 6);

  b) the supply and return pipes (3,4, 6) together with further pipe sections (11, 12) form a ring circuit (3, 11, 4; 3, 11, 12, 6),

  c) between the supply and return pipes (3, 4, 6) there is connected an electrolytic cell (5) which forms a closed system together with the container (1) and the ring circuit (3, 11, 4; 3, 11, 12, 6);

  d) the electrolytic cell (5) contains in known manner an anode (35) and cathode (36), can be connected to direct voltage and is driven by means of an electric control device (22) with a current density of about 5 to 50, preferably 20 mA/cm$^2$ electrode surface;

  e) a circulation device (21) circulates the water out of the container (1) around the ring circuit (3, 11, 4; 3, 11, 12, 6) and the cell (5);

  f) control valves (15, 18; 16, 17; 19) alternately connect the pipe section (4) [leading] to the cell (5) with its outlet (40) and the pipe section (11) [leading] from the cell (5) with its inlet (39) and vice versa, and ventilate the container (1);

  g) a circuit arrangement (23) controls the valves (15 to 19) and the electrolytic cell (5).

3. Device according to claim 2, characterised in that the container (1) contains a measurement sensor (10) which actuates a ventilation valve (19) for ventilating the container (1).

4. Device according to claim 3, characterised in that an electronic conductance measurement probe (10) is provided as measurement sensor.

5. Device according to one of claims 2 to 4, characterised in that there is a change-over unit (26 to 28) set by a control electronics device (22) with which on the one hand the polarity of the cell (5) is changed and on the other hand the valves (15 to 18) are set to change the throughflow direction of the water through the cell (5).

6. Device according to one of claims 2 to 5, characterised in that there is a central control device (23) which determines the change-over time interval for the change-over unit in accordance with the water hardness.

7. Device according to one of claims 2 to 6, characterised in that the electrolytic cell (5) comprises a housing (30), rectangular in cross-section, which forms a cavity (31) in which two electrodes (35, 36), arranged at a distance of 0.3 millimetres to one millimetre and forming an anode and a cathode, are located opposite each other, in that between the two electrodes there is an ion-conducting dividing wall (32) which divides the cavity (31) into an anolyte chamber (33) receiving the anode and a catholyte chamber (34) receiving the cathode (36), in that the anode and cathode chambers are joined together at one end by a flow duct (38) and at the other end they each have a duct (39, 40), of which the duct (39) adjacent to the anode and joined to the fluid supply line (3) forms the inlet and the other duct (40) the outlet of the cell (5).

8. Device according to claim 7, characterised in that the anode chamber and the cathode chamber (33, 34) of the electrolytic cell (5) are separated from each other by a cation exchange membrane (32).

9. Device according to claim 8, characterised in that the flow resistance of the membrane (32) is large with respect to that of the anode and the cathode chambers (33, 34).

10. Device according to claim 8 or 9, characterised in that the membrane (32) is made of sulphonated polytetrafluorethylene.

11. Device according to claim 7, characterised in that the electrodes (35, 36) are porous and fill the anode and/or cathode chamber.

12. Device according to one of claims 7 to 11, characterised in that the electrodes (35, 36) are of activated titanium, preferably in the form of a mesh or expanded metal.

13. Device according to claim 12, characterised in that the electrodes (35, 36) are activated with noble metals.

14. Device according to one of claims 7 to 13, characterised in that the electrodes (35, 36) contain electro catalysts.

15. Device according to one of claims 7 to 11, characterised in that the anode and cathode chambers (33, 34) are provided with a turbulence grid (37).

16. Device according to one of claims 7 to 15, characterised in that the effective electrode surface is 20 to 250 cm², preferably 100 cm².

17. Device according to one of claims 2 to 16, characterised in that the consuming devices (13, 14) are tapped off from the pipe section (6, 12) of the ring circuit (13, 11, 12, 6) which is connected to the return pipe line (11) and which opens into the container (1).

**Revendications**

1. Procédé pour désinfecter et adoucir simultanément l'eau qui est prélevée en des quantités de quelques litres/jour à partir du réseau d'alimentation en eau et est envoyée dans le cas d'un prélèvement discontinu, à différents appareils d'utilisation (13,14), moyennant l'utilisation d'une cellule (5) connue en soi, qui travaille selon le principe de la dissolution électrolytique et dont la polarité de la tension peut être inversée, caractérisé par le fait que l'eau chauffée devant être traitée est envoyée, avant son prélèvement, à un accumulateur (1), qui forme, conjointement avec une canalisation en anneau (3,11,4;3,11, 12,6) et la cellule électrolytique intercalée (5), un circuit fermé, que l'eau est entraînée en circulation dans ce circuit et qu'à des intervalles de temps déterminés, la direction d'écoulement de l'eau dans la cellule (5) est inversée, par le fait qu'en alternance la section de canalisation (4), qui aboutit à la cellule (5), est reliée à la sortie (40) de la cellule et la section de canalisation (11) partant de la cellule (5) est reliée à l'entrée (39) de cette dernière, et inversement, et la polarité de la tension de la cellule est simultanément inversée.

2. Dispositif pour la mise en oeuvre du procédé suivant la revendication 1, caractérisé par les caractéristiques suivantes :
   a) un récipient fermé (1) possédant une contenance égale à environ 0,5 à 2 dm³ et égale de préférence à 1 dm³, con tient des raccords reliés au réseau d'alimentation en eau (2) ainsi qu'à des canalisations aller et retour (3,4,6);
   b) les canalisations d'aller et de retour (3,4,6) forment, conjointement avec d'autres sections de canalisations (11,12), une canalisation en anneau (3,11,4;3,11,12,6),
   c) entre les canalisations aller et retour (3,4,6) est branchée une cellule électrolytique (5), qui forme, conjointement avec le récipient (1) et la canalisation en anneau (3,11,4;3,11,l2,6), un circuit fermé;
   d) la cellule électrolytique (5) contient, de façon connue, une anode (35) et une cathode (36), peut être raccordée à la tension continue et est activée par un dispositif de commande électrique (22) avec une densité de courant comprise entre environ 5 à 20 et égale de préférence à 20 mA/cm² de surface d'électrode ;
   e) un dispositif de circulation (21) entraîne en circulation l'eau à partir du récipient (1) en la faisant circuler dans la canalisation en anneau (3,11,4;3,11,12,6) et dans la cellule (5) ;
   f) des soupapes de commande (15,18;16,17;19) relient en alternance la section de canalisation (4) aboutissant à la cellule (5) à la sortie (40) de cette dernière et la section de canalisation (11) partant de la cellule (5) à l'entrée (39) de cette dernière, et inversement, et désaèrent le récipient (1);
   g) un montage (23) commande les soupapes (15 à 19) de la cellule électrolytique (5).

3. Dispositif suivant la revendication 2, caractérisé par le fait que le récipient (1) contient un capteur de mesure (10), qui actionne une soupape de désaération (19) servant à désaérer le récipient (1).

4. Dispositif suivant la revendication 3, caractérisé par le fait qu'il est prévu, comme capteur de mesure, une sonde électronique de mesure de la conductivité (10).

5. Dispositif suivant l'une des revendications 2 à 4, caractérisé par le fait qu'il est prévu une unité de commutation (26 à 28), qui est branchée par le système électronique de commande (22) et à l'aide de laquelle la polarité de la cellule (5) est inversée et ensuite les vannes (15 à l8) sont branchées dans le sens d'une modification du sens de traversée de l'eau dans la cellule (5).

6. Dispositif suivant l'une des revendications 2 à 5, caractérisé par le fait qu'il est prévu un dispositif central de commande (23), qui détermine l'intervalle de temps de commutation pour l'unité de commutation, en fonction de la dureté de l'eau.

7. Dispositif suivant l'une des revendications 2 à 6, caractérisé par le fait que la cellule électrolytique (5) contient un boîtier (30) qui possède une section transversale rectangulaire et forme une cavité (31), dans laquelle deux électrodes (35,36), qui sont séparées l'une de l'autre par un espace compris entre 0,3 millimètre et l millimètre et constituent une anode et une cathode, sont disposées en vis-à-vis l'une de l'autre, qu'entre les deux électrodes est prévue une paroi de séparation (32) conductrice pour les ions, qui subdivise la cavité (31) en une chambre (33) pour l'anolyte, qui loge l'anode, et une chambre (34) pour le catholyte, qui loge la cathode (36), que l'espace logeant l'anode et l'espace logeant la cathode sont reliés entre eux, au niveau d'une face frontale, par un canal d'écoulement (38) et possède, au niveau de l'autre face frontale, des canaux respectifs (39,40), parmi lesquels le canal (39), qui est voisin de l'anode et est relié à la canalisation (3) d'amenée du liquide, forme l'entrée et l'autre canal (40) forme la sortie de la cellule (5).

8. Dispositif suivant la revendication 7, caractérisé par le fait que les espaces (33,34) logeant l'anode et la cathode de la cellule électrolytique (5) sont séparés l'un de l'autre par une membrane échangeuse de cations (32).

9. Dispositif suivant la revendication 8, caractérisé par le fait que la résistance d'écoulement de la membrane (32) est élevée par rapport à celle des espaces (33, 34) de l'anode et de la cathode.

10. Dispositif suivant la revendication 8 ou 9, caractérisé par le fait que la membrane (32) est constituée par du polytétrafluoroéthyle sulfoné.

11. Dispositif suivant la revendication 7, caractérisé par le fait que les électrodes (35,36) sont poreuses et remplissent les espaces prévus pour l'anode et la cathode.

12. Dispositif suivant l'une des revendications 7 à 11, caractérisé par le fait que les électrodes (35,36) sont réalisées en titane activé, de préférence sous la forme d'un treillis ou d'un métal déployé.

13. Dispositif suivant la revendication 12, caractérisé par le fait que les électrodes (35,36) sont activées par des métaux précieux.

14. Dispositif suivant l'une des revendications 7 à 13, caractérisé par le fait que les électrodes (35,36) contiennent des électrocatalyseurs.

15. Dispositif suivant l'une des revendications 7 à 11, caractérisé par le fait que les espaces (33,34) pour l'anode et la cathode comportent une grille (37) de formation de turbulences.

16. Dispositif suivant l'une des revendications 7 à 15, caractérisé par le fait que la surface efficace des électrodes est comprise entre 20 et 250 cm² et est égale de préférence à 100 cm².

17. Dispositif suivant l'une des revendications 2 à 16, caractérisé par le fait que les appareils d'utilisation (13,14) s'étendent à partir de la section de canalisation (6,12) de la canalisation en anneau (3,11,12,6), qui est reliée à la canalisation de retour (11) et débouche dans le récipient (1).

FIG 1

FIG 3

FIG 2